# EUROPEAN PATENT SPECIFICATION

(11) **EP 1 386 068 B1**
(45) Date of publication and mention of the grant of the patent: **09.01.2008**
(21) Application number: 02718409.2
(22) Date of filing: 03.05.2002
(51) Int. Cl.: F02B 29/04, F01P 7/16

(54) **AUTOMOTIVE SYSTEM INCLUDING CHARGE AIR DELIVERY**
LADELUFTKÜHLER
SYSTEME AUTOMOBILE COMPRENANT UN SYSTEME D'APPORT D'AIR DE SURALIMENTATION

(30) Priority: 10.05.2001 GB 0111533
(43) Date of publication of application: 04.02.2004
(73) Proprietor: Calsonic Kansei UK Limited, Llanelli, Carmarthenshire SA14 8HU (GB)
(72) Inventor: THOMAS, Gwyn, Carmarthenshire SA15 4RY (GB)
(74) Representative: Davies, Gregory Mark
(86) International application number: PCT/GB2002/002068
(87) International publication number: WO 2002/090739

(56) References cited:
- DE-A- 19 727 277
- DE-A- 19 849 619
- JP-A- 59 224 414
- US-A- 4 236 492
- PATENT ABSTRACTS OF JAPAN vol. 008, no. 274 (M-345), 14 December 1984 (1984-12-14) & JP 59 145325 A (TOUYOU RADIATOR KK), 20 August 1984 (1984-08-20)
- "KUEHLMITTELGEKUEHLTE LADELUFTKUEHLER FUER KRAFTFAHRZEUG-MOTOREN" MTZ MOTORTECHNISCHE ZEITSCHRIFT, FRANCKH'SCHE VERLAGSHANDLUNG,ABTEILUNG TECHNIK. STUTTGART, DE, vol. 61, no. 9, September 2000 (2000-09), pages 592-599, XP000959361 ISSN: 0024-8525

## Description

The present invention relates to an automotive system including charge air delivery, in particular to such a system for use in cooling charge air for delivery to motive power production apparatus, according to claim 1, firstpart, according to DE-A- 198 49 619 or US-A-4 236 492. There is a trend in modern automotive design to require turbo charge pressures for turbo charged vehicles (such as turbo charged diesel vehicles) to be increased in order to increase power.

Previously air cooled charge air coolers have been used to dissipate heat from charge air to reduce the temperature of the charge air to the required temperature for delivery to the motive power production apparatus (engine). Air cooled charge air coolers typically dissipate heat in the range 12 - 15 Kw; modern designs may require dissipation of up to 25 Kw and this cannot readily be achieved using air cooled charge air coolers.

It has been proposed to use a water cooled charge air cooler to enable the required heat dissipation to be achieved. This suffers from disadvantages, as will be described in detail later hereinafter.

An improved system has now been devised.

According to a first aspect, the present invention provides:
a liquid coolant circuit for carrying engine coolant, the liquid coolant circuit including a radiator arrangement for dissipating heat from the engine coolant;
a charge air delivery system for delivering charge air from compressor means to motive power production apparatus;
a two stage heat exchanger arrangement for acting on the charge air, the two stage arrangement comprising:
   a first stage liquid cooled heat exchanger stage having a flowpath system for transit of charge air and sealed therefrom a flowpath system for carrying liquid coolant exited from an upstream part of the radiator arrangement;
   a second stage, gas cooled, heat exchanger stage downstream of the first stage in the charge air system, the second stage having a flowpath system for transit of charge air and sealed therefrom a flowpath system for directing cooling gas, characterised in that at least some of the liquid coolant exiting the charge air heat exchanger is directed to be capable of aiding in cabin warm-up.

By including the liquid cooled heat exchanger stage in the engine coolant circuit downstream of the "cool end" of the primary vehicle radiator, the requirement (which would otherwise be the case) for having a pump and supplementary radiator for a water cooled charge air cooler (as in known with prior art systems) is avoided. This provides a smaller system footprint and frees up valuable space in the interior of the engine compartment.

It is preferred that the radiator in the liquid engine coolant circuit comprises the primary vehicle radiator used as a primary means for dissipating heat from the liquid engine coolant.

Beneficially, certain warm up may be achieved by directing the exiting liquid coolant to a cabin heater device (typically a heat exchanger heater device).

The second stage gas cooled heat exchanger is typically cooled by air (typically ambient air). The air is typically forced through the gas cooled charge air cooler as the vehicle moves (or by a fan or the like).

The first and second stages are preferably combined in an integrated unit, charge air from the first stage passing immediately into the charge air flow system of the second stage. A connecting shroud may be positioned to direct charge air flow between the first and second stages. Beneficially, one or both of the first and second stages may comprise an array of spaced heat exchanger tubes extending between header portions. In one embodiment the header portion of the charge air cooler may encompass the heat exchange tubes of the liquid cooled charge air heat exchanger stage.

A connecting shroud or air diverter may be positioned to direct charge air flow between the first and second stages. The shroud or air diverter is preferably shaped to configure to divert the direction of flow of the charge air between the first and second stages.

In a preferred embodiment, the connecting air diverter or shroud may co-operate to engageably mate and locate in position components of the first and/or second heat exchanger stage.

In one embodiment the first and second stages may be combined in an integrated unit, charge air from the first stage passing into the charge air flow system of the second stage, the first and second stages being fused as an integrated unit, for example in a single operation fusing process (such as brazing for aluminium components).

In an alternative embodiment the first and second stages may be fabricated separately and combined as a two part assembly by clenching or other mechanical joining means.

The invention will now be further described in a specific embodiment, by way of example only, and with reference to the accompanying drawings in which:
Figure 1 is a schematic view of a prior art automotive heat exchanger system;
Figure 2 is a schematic view of an automotive system in accordance with the invention;
Figure 3 is an explanatory diagram concerning the heat balance for an automotive system according to the invention;
Figure 4 is a perspective view of a part of a heat exchanger system in accordance with the invention;
Figure 5 is an exploded view of the heat exchanger system of Figure 4;
Figure 6 is a perspective view of an alternative embodiment of the heat exchanger system in accordance with the invention;
Figure 7 is an exploded perspective view of the heat exchanger system of Figure 6;
Figures 8 to 10 are alternative views of a liquid cooled charge air cooler apparatus according to the invention; and
Figures 11 to 14 are alternative views of another liquid cooled charge air cooler according to the invention.

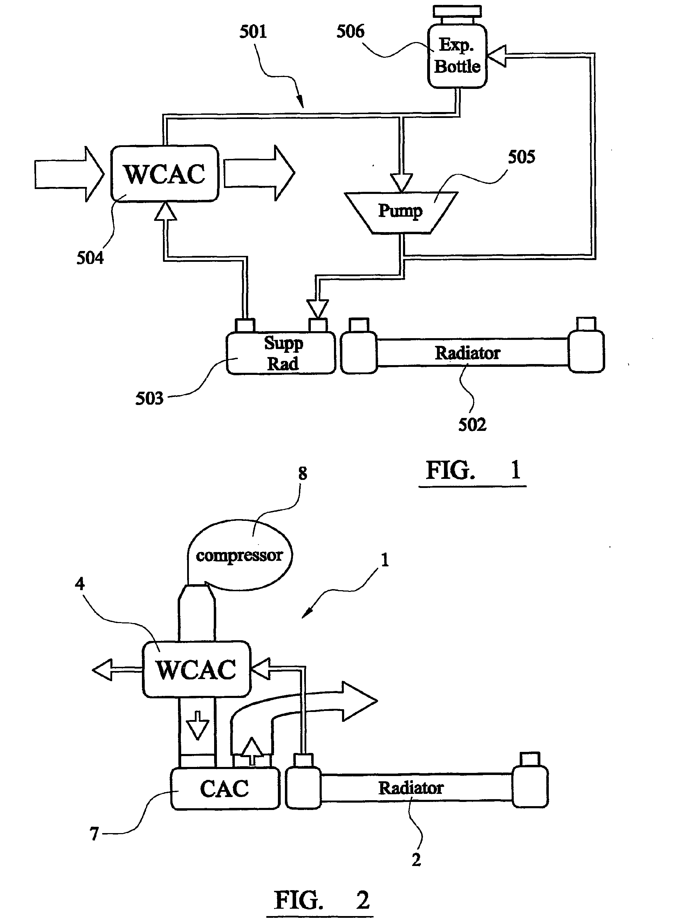

The arrangement shown in Figure 1 represents a prior art automotive heat exchanger system 501 which includes a primary engine cooling circuit including a radiator 502 (the primary circuit line is not shown in Figure 1). Additionally, the system includes a supplementary circuit including a supplementary radiator 503 for supplying coolant liquid (water) to pass through a water cooled charge air cooler 504. Compressed charge air passes through water cooled charge air cooler 504 where heat transfer occurs and lower temperature charge air exits. The supplementary coolant circuit, in addition to supplementary radiator 503 and water cooled charge air cooler 504 includes a separate pump 505 and expansion vessel 506. Such prior art systems are becoming used in large vehicles, where there is a current trend for turbo charge pressure and temperature to be increased.

Conventionally, air cooled charge air coolers have been required to dissipate heat at, for example, 12-15 Kw. A prior art system such as that described in Figure 1 using alternatively a water cooled charge air cooler 504 is capable of heat dissipation in the region of 25 Kw. A disadvantage of the system shown in Figure 1 is that the supplementary circuit for supplying the water cooled charge air cooler 504 including the pump and expansion vessel 506 in addition to the supplementary radiator 503 takes up space in the vehicle engine compartment. In the automotive industry, particularly in respect of lower end of market vehicles, which have smaller engine compartment cavities, space is at a premium.

Turning to the arrangement shown in Figure 2, the present invention utilises the primary engine coolant circuit including the primary radiator 2 to provide liquid coolant to a two stage charge air cooling arrangement. The two stage charge air cooling arrangement 1 comprises a water cooled charge air cooler stage 4 fed directly from the low temperature end of the primary radiator 2. The charge air is subsequently ducted through an air charge air cooler stage 7. The charge air from compressor 8 is therefore directed first through the water cooled charge air cooler stage 4 and subsequently through the air cooled charge air cooler stage 7, the air cooled charge air cooler 7 is mounted, in the embodiment shown in Figure 2, immediately adjacent the primary engine coolant radiator 2.

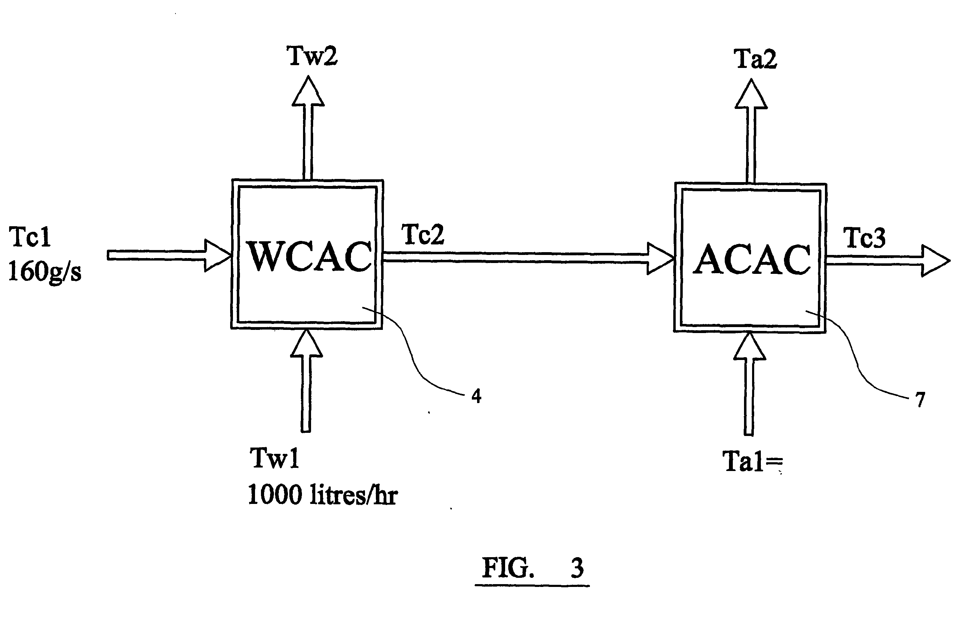

Figure 3 shows a system diagram in which Tc1 represents the high temperature charge air inlet into the water cooled charge air cooler 4 and Tc2 represents the temperature drop temperature of the charge air exiting stage 4. Tw1 represents the inlet temperature of the primary radiator exited engine coolant entering stage 4 and Tw2 represents the elevated temperature of the coolant exiting stage 4.

Tc2 is also the temperature of the inlet charge air into the air cooled charge air cooler stage 7 and Tc3 represents the subsequently cooled charge air temperature on exit from stage 7. Tal represents the air temperature entering the air cooled charge air cooler stage 7, and Ta2 represents the air temperature upon exit.

Effectively in this embodiment, the work done by water cooled charge air cooler 4 in reducing temperature Tc1 down to Tc2 is taken up by the engine coolant Tw2. The primary system radiator 2 is therefore required to do more work in dissipation of heat from engine coolant flowing in the engine coolant circuit. An aspect of the invention is that the additional heat represented at Tw2 in the engine coolant circuit can be directed to other devices (heating ventilation and air conditioning devices, or others in the general automotive system) for dissipation in order to reduce the workload on primary radiator 2. For example, the coolant leaving water cooled charge air cooler stage 4 (Tw2) could be directed to cabin air heater of a heat exchanger type, in order to use the additional heat to heat the cabin, where required.

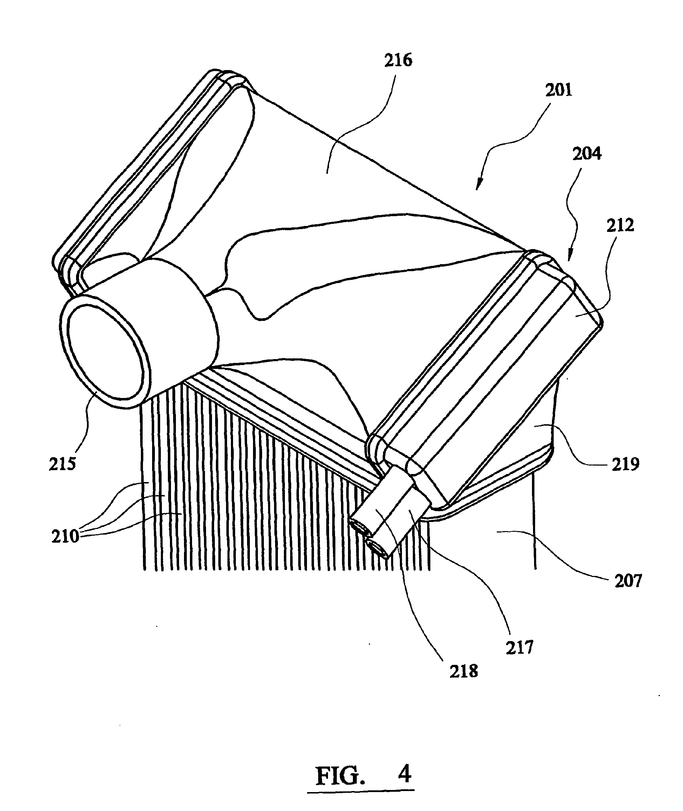

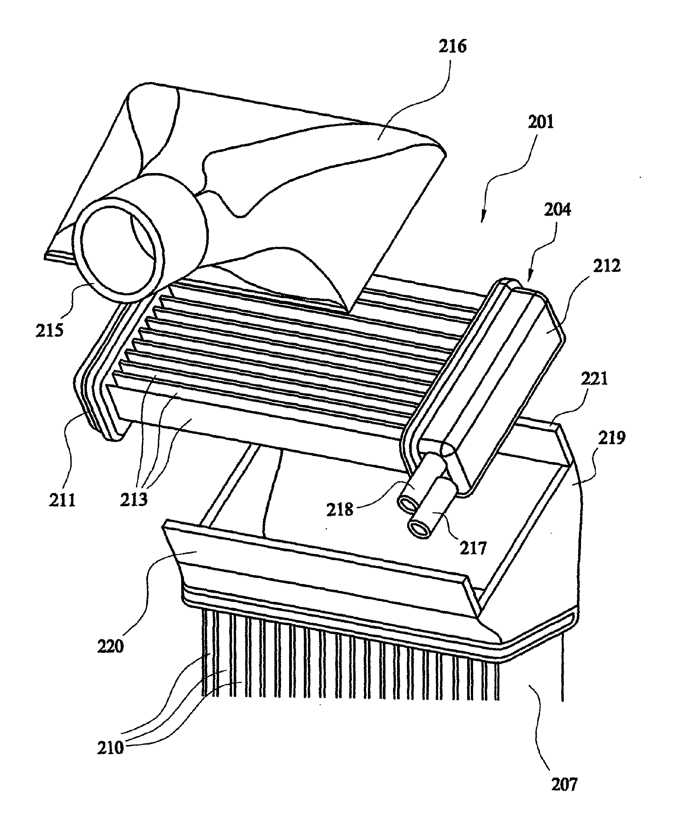

Referring to the embodiment of Figures 4 and 5, there is shown heat exchanger system 201 comprising liquid cooled charge air cooler 204 supplied with engine coolant from the "cool side" outlet of the primary vehicle engine coolant radiator. The liquid cooled charge air cooler 204 comprises a pair of spaced headers 211, 212 and extending, intermediately therebetween, a plurality of spaced heat exchanger tubes 213. The spaces between the tubes provide air flow passageways for the transit across the liquid cooled charge air cooler 204 of charge air, which is directed into the system via duct 215 and shroud 216. The cooler 204 is provided with a liquid (water) inlet 217 supplying engine coolant from the primary vehicle radiator "cool side". Cooler 204 is provided with a liquid coolant (water) outlet 218 connected back into the vehicle primary coolant circuit, and which preferably permits high temperature coolant exiting from cooler 204 to be directed to other heat dissipation devices in the circuit (such as for example cabin air heaters of the heat exchanger variety).

An air flow diverter duct 219 is provided with flange elements 220, 221 for locating and mounting the liquid cooled charge air cooler 204. Shroud 216 and duct 219 effectively comprise a charge air inlet header for the air cooled charge air cooler stage 207. The liquid cooled charge air cooler 204 is effectively mounted largely within the header formed by shroud 216 and duct 219.

Air flow diverter 219 diverts charge air which has transited through the liquid cooled charge air cooler 204 to be directed into air cooled charge air cooler 207, the construction and arrangement of air cooled charge air cooler 207 may conform largely to the construction arrangement of prior art air cooled charge air coolers, in that air is ducted via a series of spaced charge air carrying heat exchange tubes 210 to an outlet charge air header (not shown) subsequently passing further along the charge air circuit. As the vehicle moves, coolant air passes between the heat exchange tubes 210 providing cooling for the charge air constrained within tubes 210.

In one embodiment, the heat exchanger arrangement 201 may be fabricated in a one shot fusing/bonding process such as for example a one shot brazing process where the components comprise aluminium or aluminium alloy clad with suitable brazing alloy (for example). Alternatively, the stages 204 and 207 may be fabricated separately (for example again in a fusion process such as brazing) and subsequently joined to the shroud 216 and air flow diverter 219 by mechanical clenching or other joining means.

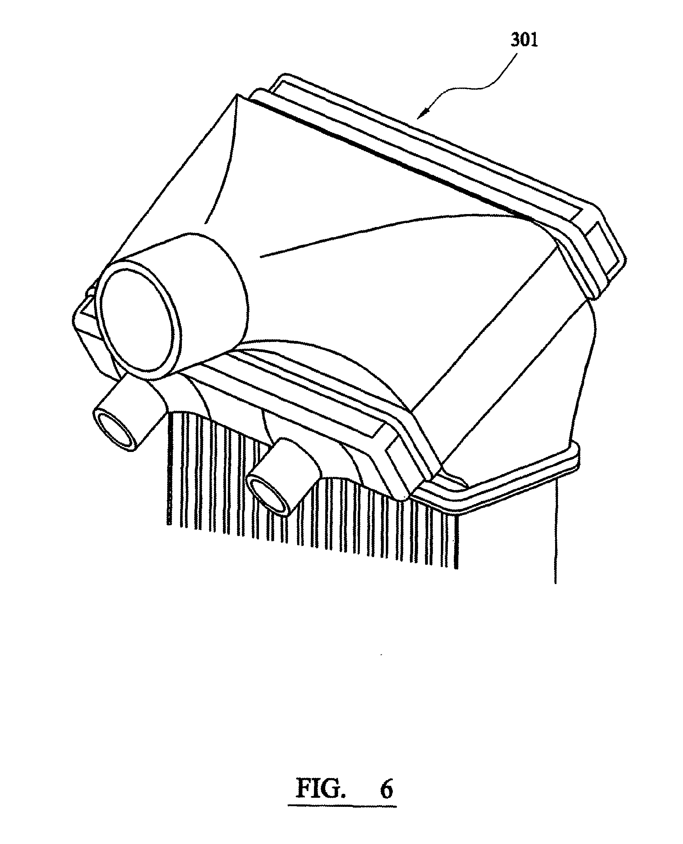

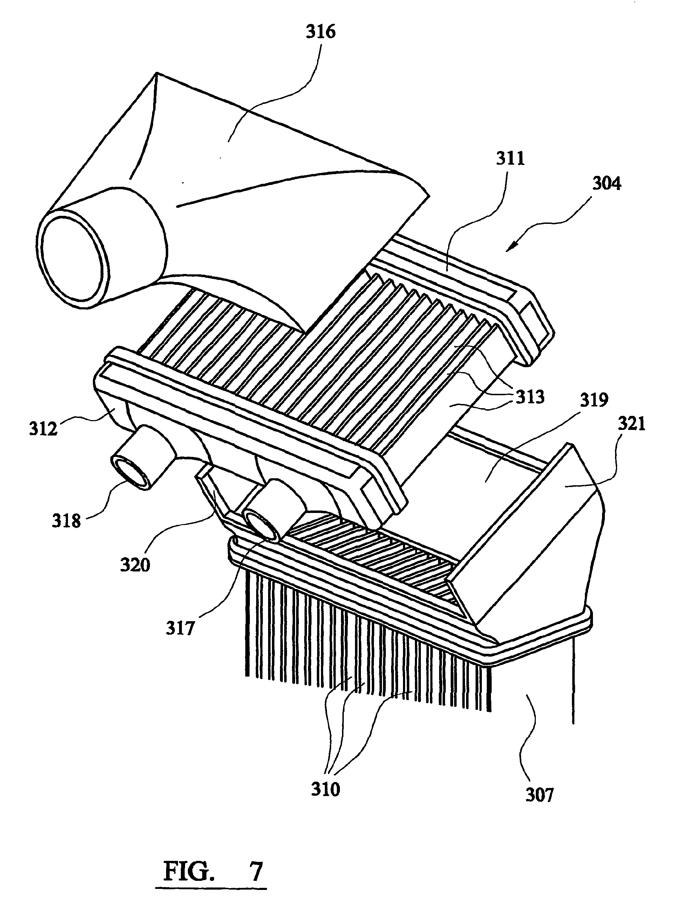

In the arrangement shown in Figures 6 and 7, the two stage heat exchanger arrangement 301 is generally similar to the arrangement shown in Figures 4 and 5; however, in this embodiment, the liquid cooled charge air cooler 304 provided with headers 311, 312 and turned through 90°, as are the heat exchange tubes 313 connecting headers 311 and 312. This provides that the heat exchange tubes 313 for the liquid cooled charge air cooler stage 304 can match up and correspond (lie parallel) with the heat exchange tube 310 spacing for the air cooled charge air cooler 307. This provides more uniform flow of charge air transiting the liquid cooled stage 304 and entering the air cooled stage 307. Engine coolant inlet 317 and outlet 318 for the liquid cooled stage 304 are provided in header 312. Flanges 320, 312 are provided at opposed side ends of the arrangement.

A major benefit of the present invention is that because the water cooled charge air cooler stage does not require a supplementary radiator or pump arrangement, less space is required within the vehicle engine department. This is a significant benefit.

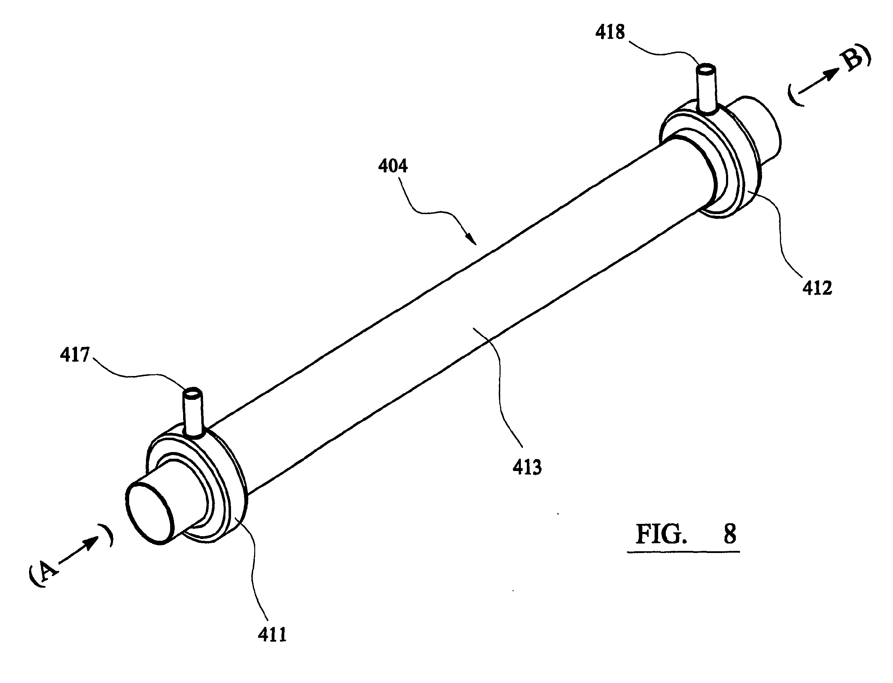

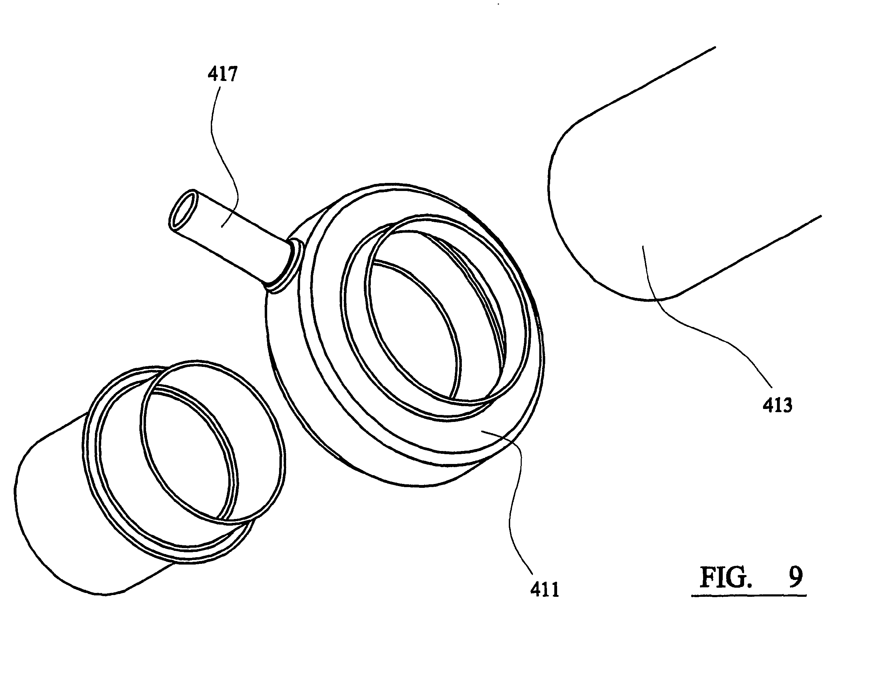

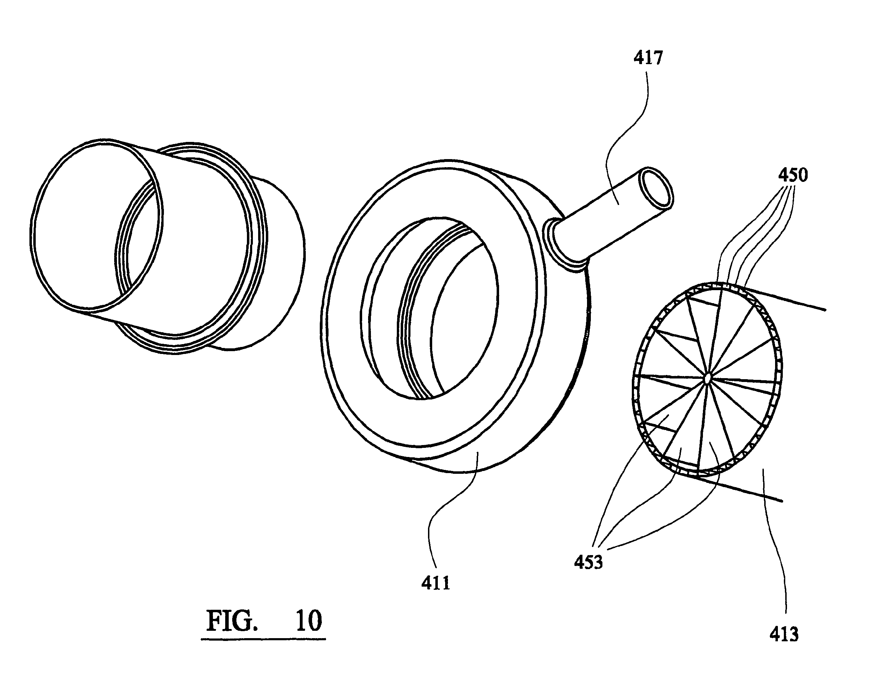

Referring to Figures 8, 9 and 10, there is shown an alternative embodiment of a liquid cooled charge air cooler stage 404 which includes a pair of spaced annular headers 411, 412 provided with a liquid (water) coolant inlet 417 and outlet 418. Extending between headers 411, 412 is an annular water jacket 413, the inner void of annular water jacket 413 defining a cylindrical charge air flow passage. The charge air flows between charge air inlet (arrow A) and charge air outlet (arrow B). The annular coolant jacket 413 includes a plurality of discrete longitudinally running channels 450. The interior charge air void of annular jacket 413 includes a vane system 453 for directing the flow of charge air in the longitudinal direction of the cooler. The arrangement shown can be used in a system in accordance with the invention. Downstream of arrow B the now cooled charge air will be directed to an air cooled charge air cooler (which may be of conventional type). The charge air pressure drop across the inlet A and outlet B is minimal because of the lack of obstruction to the flow of charge air through the axial void of the device.

According to a further aspect, the invention therefore provides a liquid cooled charge air cooler comprising a charge air carrying duct extending between an inlet and an outlet, a liquid coolant jacket extending about the periphery of the charge air carrying duct.

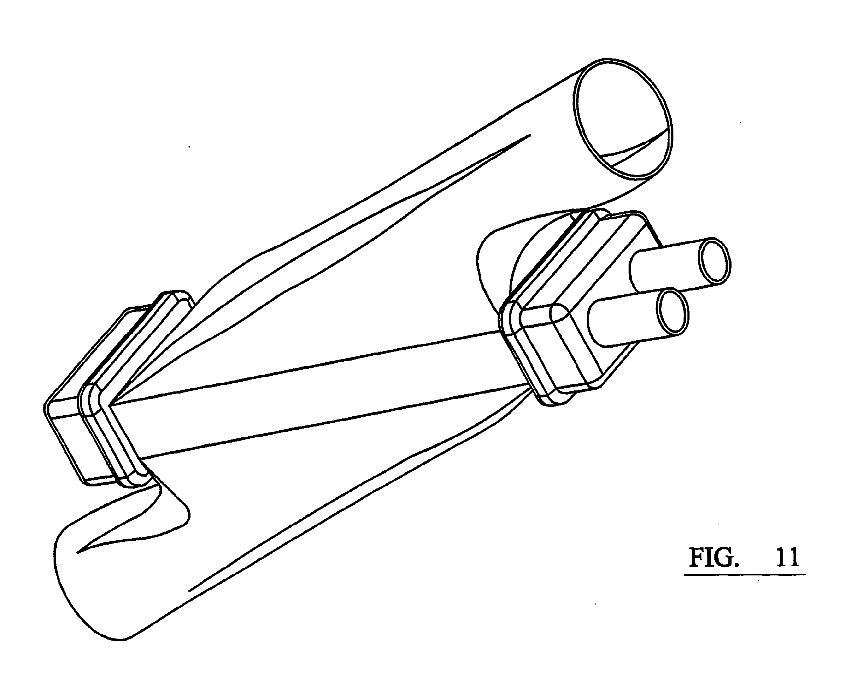

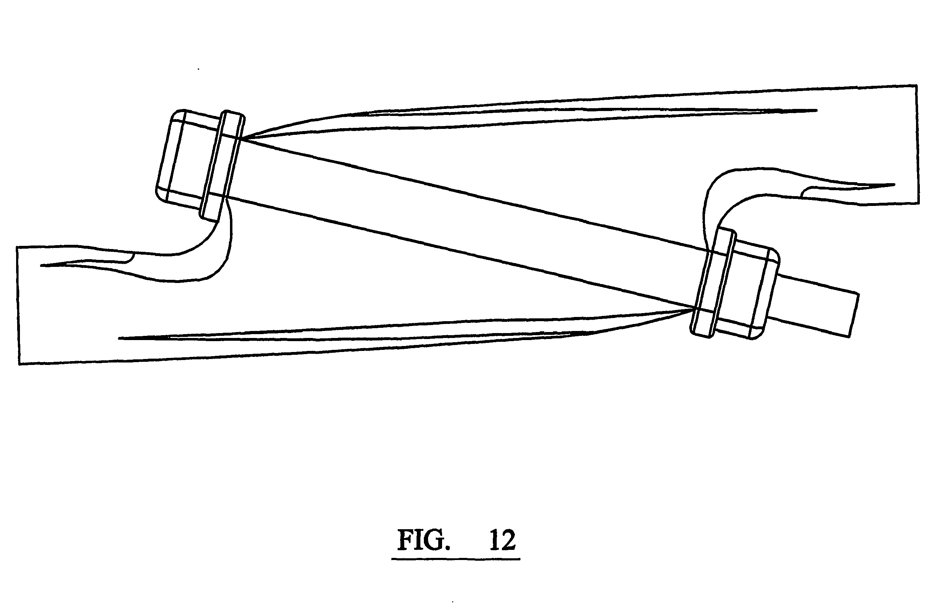

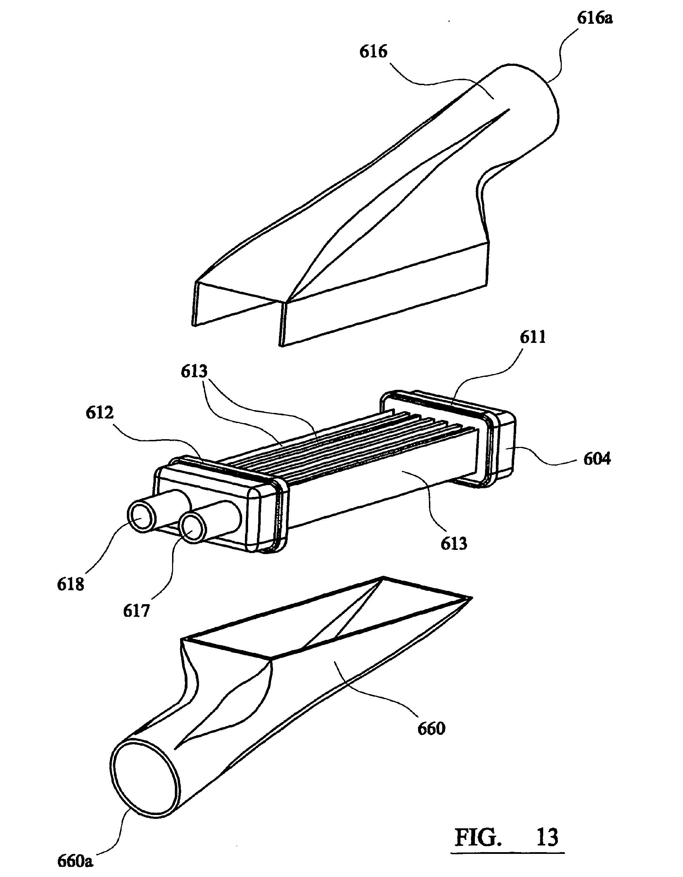

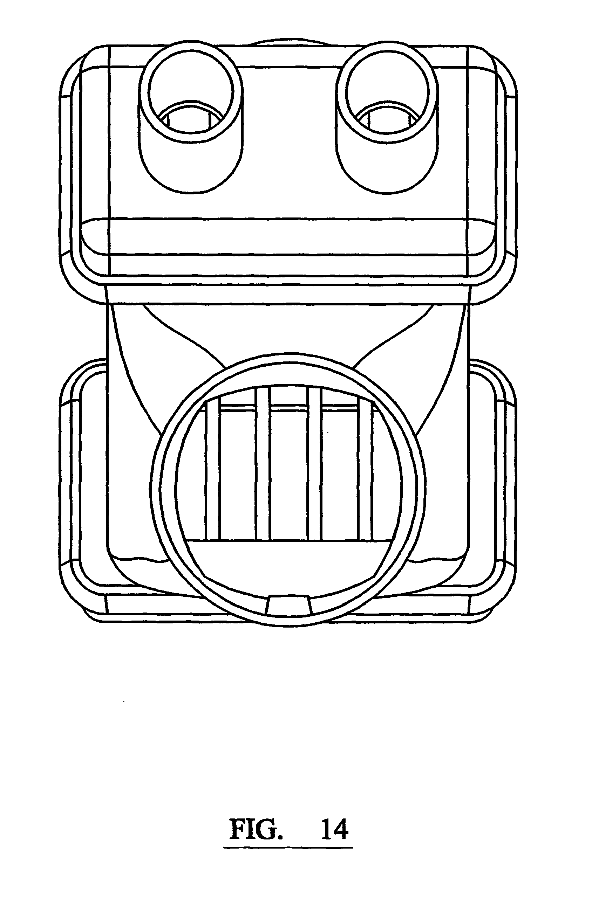

Referring now to Figures 11 to 14, there is shown a further alternative embodiment of a liquid cooled charge air cooler 604 which may be used in a system in accordance with the invention.

The liquid cooled charge air cooler unit 604 is generally similar to the arrangement shown in Figure 5, including a pair of spaced headers 611, 612, an inlet 617 fed by the engine coolant circuit downstream of the "cool end" of the primary engine coolant radiator and an engine coolant outlet 618. Intermediate headers 611, 612 extend space heat exchanger tubes 613. Inlet and outlet shrouds 616, 660 close over the array of spaced heat exchange tubes 613 to define the diverging inlet 616 into the stage 604, and a converging outlet 660 out of the stage 604 respectively. The inlet 616a and outlet 660a include neck portions angled to ensure that the inlet charge air flow and outlet charge air flow is in a substantially common direction. This has been found to improve performance.

According to another aspect, the invention therefore provides a liquid cooled charge air cooler comprising charge air cooler core including a plurality of spaced tubes arranged to carry a heat transfer coolant liquid, the space between adjacent tubes defining an air flow matrix for flow of charge air through the stage; inlet and outlet shrouds directing charge air into and out of the charge air cooler core to pass between the spaced heat exchanger tubes, the inlet and outlet shrouds including neck portions inclined correspondingly to provide a substantially common charge air inlet direction and charge air outlet direction, wherein the transverse direction across the charge air cooler core is not in line with the substantially in line inlet and outlet charge air directions.

## Claims

1. An automotive system comprising;
a liquid coolant circuit for carrying engine coolant, the liquid coolant circuit including a radiator arrangement (2) for dissipating heat from the engine coolant;
a charge air delivery system for delivering charge air from compressor means (8) to motive power production apparatus;
a two stage heat exchanger arrangement for acting on the charge air, the two stage arrangement comprising:
a first stage liquid cooled heat exchanger stage (4) having a flowpath system for transit of charge air and sealed therefrom a flowpath system for carrying liquid coolant exited from an upstream part of the radiator arrangement;
a second stage, gas cooled, heat exchanger stage (7) downstream of the first stage in the charge air system, the second stage having a flowpath system for transit of charge air and sealed therefrom a flowpath system for directing cooling gas,
**characterised in that** at least some of the liquid coolant exiting the charge air heat exchanger is directed to be capable of aiding in cabin warm up.

2. A system according to claim 1, wherein the radiator arrangement (2) in the liquid engine coolant circuit comprises the primary radiator used as the primary means of dissipating heat from the liquid engine coolant.

3. A system according to any preceding claim, wherein said at least some liquid coolant is piped to a cabin heater device.

4. A system according to any preceding claim, wherein the second stage(7)(gas cooled) is cooled by air.

5. A system according to claim 4 wherein the second stage (7) (gas cooled) is cooled by ambient air.

6. A system according to any preceding claim, wherein the first (4) and second (7) stages are combined in an integrated unit, charge air from the first stage passing immediately into the charge air flow system of the second stage (7),

7. A system according to any preceding claim, wherein a connecting shroud is positioned to direct charge air flow between the first (4) and second (7) stages.

8. A system according to claim 7, wherein the shroud is shaped or configured to divert the direction of flow of the charge air between the first (4) and second (7) stages.

9. A system according to claim 7 or claim 8, wherein the connecting shroud cooperates to engagably mate and locate in position components of the first (4) and/or second (7) heat exchanger stage.

10. A system according to any preceding claim, wherein the first (4) and second (7) stages are combined in an integrated unit, charge air from the first stage (4) passing into the charge air flow system of the second stage (7), the first (4) and second (7) stages being fused as the integrated unit in a single operation fusing process.

11. A system according to claim 10, wherein the first (4) and second (7) stages are brazed as the integrated unit in a one-shot brazing operation.

12. A system according to any of claims 1 to 9, wherein the first (4) and second (7) stages are combined in an integrated unit, charge air from the first stage (4) passing immediately into the charge air flow system of the second stage (7), the first (4) and second (7)stages being combined as a two-part assembly by clenching or other mechanical means.

## Patentansprüche

1. Automotives System
mit einem Flüssigkeitskühlkreis, das Motorkühlmittel führt, wobei der Flüssigkeitskühlkreis eine Kühleranordnung (2) zum Abführen von Wärme aus dem Motorkühlmittel aufweist;
mit einem Ladeluft-Zuführsystem zum Zuführen von Ladeluft aus einer Kompressoranordnung (8) an eine Antriebskraftmaschine;
mit einer zweistufigen Wärmetauscheranordnung, die auf die Ladeluft einwirkt und die Folgendes enthält:
eine erste, flüssigkeitsgekühlte Wärmetauscherstufe (4), die ein Strömungspfadsystem für den Durchfluss von Ladeluft aufweist und, gegenüber diesem abgedichtet, ein Strömungspfadsystem für den Durchfluss von Kühlflüssigkeit, die die Stromaufwärtsseite der Kühleranordnung verläßt;
eine zweite, gasgekühlte Wärmetauscherstufe (7), die stromabwärts der ersten Stufe in dem Ladeluftsystem angeordnet ist und die ein Strömungspfadsystem für den Durchfluss von Ladeluft aufweist und, gegenüber diesem abgedichtet, ein Strömungspfadsystem zum Leiten von Kühlgas;
**dadurch gekennzeichnet,**
**dass** zumindest ein Teil der Kühlflüssigkeit, die den Ladeluftwärmetauscher verlässt, so geführt wird, dass sie in der Lage ist, das Aufwärmen der Kabine zu unterstützen.

2. System nach Anspruch 1, **dadurch gekennzeichnet, dass** die Kühleranordnung (2) in dem Motorkühlflüssiqkeitskreis den primären Kühler als das primäre Mittel benutzt, um Wärme von der Motorkühlflüssigkeit abzuführen.

3. System nach einem oder mehreren der vorhergehenden Ansprüche, **dadurch gekennzeichnet, dass** zumindest ein Teil der Kühlflüssigkeit einer Kabinenheizungseinrichtung zugeführt wird.

4. System nach einem oder mehreren der vorhergehenden Ansprüche, **dadurch gekennzeichnet, dass** die zweite (gasgekühlte) Stufe (7) durch Luft gekühlt wird.

5. System nach Anspruch 4, **dadurch gekennzeichnet, dass** die zweite (gasgekühlte) Stufe (7) durch Umgebungsluft gekühlt wird.

6. System nach einem oder mehreren der vorhergehenden Ansprüche, **dadurch gekennzeichnet, dass** die erste (4) und die zweite (7) Stufe in einer integrierten Einheit kombiniert sind und dass Ladeluft von der ersten Stufe unmittelbar in das Ladeluft-Strömungssystem der zweiten Stufe (7) geleitet wird.

7. System nach einem oder mehreren der vorhergehenden Ansprüche, **dadurch gekennzeichnet, dass** ein verbindendes Luftführungselement vorgesehen ist, um den Ladeluftstrom zwischen der ersten (4) und der zweiten (7) Stufe zu führen.

8. System nach Anspruch 7, **dadurch gekennzeichnet, dass** das Luftführungselement so geformt oder ausgebildet ist, dass es die Flussrichtung der Ladeluft zwischen der ersten (4) und der zweiten (7) Stufe umleitet.

9. System nach Anspruch 7 oder 8, **dadurch gekennzeichnet, dass** das verbindende Luftführungselement mit den Komponenten der ersten (4) und/oder der zweiten Wärmetauscherstufe (7) zusammenwirkt und diese in Position hält.

10. System nach einem oder mehreren der vorhergehenden Ansprüche, **dadurch gekennzeichnet, dass** die erste (4) und die zweite (7) Stufe in einer integrierten Einheit kombiniert sind und Ladeluft von der ersten Stufe (4) in das Ladeluft-Strömungssystem der zweiten Stufe (7) geleitet wird, und dass die erste (4) und die zweite (7) Stufe in einem einzigen Lötvorgang (fusing process) zu der integrierten Einheit verlötet (fused) sind.

11. System nach Anspruch 10, **dadurch gekennzeichnet, dass** die erste (4) und die zweite (7) Stufe in einem einzigen Hartlötvorgang zu der integrierten Einheit hart verlötet sind.

12. System nach einem oder mehreren der Ansprüche 1 bis 9, **dadurch gekennzeichnet, dass** die erste (4) und die zweite (7) Stufe in einer integrierten Einheit kombiniert sind und Ladeluft von der ersten Stufe (4) unmittelbar in das Ladeluft-Strömungssystem der zweiten Stufe (7) geleitet wird, und dass die erste (4) und die zweite (7) Stufe zu einer zweiteiligen Anordnung durch Zusammenpressen oder andere mechanische Mittel kombiniert sind.

## Revendications

1. Système automobile comprenant :
un circuit de fluide de refroidissement liquide pour acheminer le fluide de refroidissement du moteur, le circuit de fluide de refroidissement liquide comprenant un agencement de radiateur (2) pour dissiper la chaleur du fluide de refroidissement du moteur ;
un système d'apport d'air de suralimentation pour délivrer de l'air de suralimentation à partir de moyens compresseurs (8) pour activer l'appareil de production d'énergie ;
un agencement d'échangeur thermique à deux étages pour agir sur l'air de suralimentation, l'agencement à deux étages comprenant :
un premier étage d'échangeur thermique refroidi par liquide (4) ayant un système de trajet d'écoulement pour le transit d'air de suralimentation et séparé hermétiquement de celui-ci, un système de trajet d'écoulement pour acheminer le fluide de refroidissement liquide sortant d'une partie en amont de l'agencement de radiateur ;
un second étage d'échangeur thermique refroidi par gaz (7) en aval du premier étage dans le système d'air de suralimentation, le second étage ayant un système de trajet d'écoulement pour le transit de l'air de suralimentation et séparé hermétiquement de celui-ci, un système de trajet d'écoulement pour diriger le gaz de refroidissement,
**caractérisé en ce qu'**au moins une partie du fluide de refroidissement liquide sortant de l'échangeur thermique d'air de suralimentation est dirigée pour assister le réchauffement de la cabine.

2. Système selon la revendication 1, dans lequel l'agencement de radiateur (2) dans le circuit de fluide de refroidissement liquide du moteur comprend le radiateur principal utilisé en tant que moyen principal pour dissiper la chaleur du fluide de refroidissement liquide du moteur.

3. Système selon l'une quelconque des revendications précédentes, dans lequel ladite au moins une partie du fluide de refroidissement liquide est canalisée vers un dispositif de réchauffement de cabine.

4. Système selon l'une quelconque des revendications précédentes, dans lequel le second étage (7) (refroidi par gaz) est refroidi par air.

5. Système selon la revendication 4, dans lequel le second étage (7) (refroidi par gaz) est refroidi par l'air ambiant.

6. Système selon l'une quelconque des revendications précédentes, dans lequel les premier (4) et second (7) étages sont combinés en une unité intégrée, l'air de suralimentation provenant du premier étage passant immédiatement dans le système d'écoulement d'air de suralimentation du second étage (7).

7. Système selon l'une quelconque des revendications précédentes, dans lequel un carénage de connexion est positionné pour diriger l'écoulement d'air de suralimentation entre les premier (4) et second (7) étages.

8. Système selon la revendication 7, dans lequel le carénage est façonné ou configuré pour dévier la direction de l'écoulement de l'air de suralimentation entre les premier (4) et second (7) étages.

9. Système selon la revendication 7 ou la revendication 8, dans lequel le carénage de connexion coopère pour accoupler par mise en prise et mettre en position les composants des premier (4) et/ou second (7) étages d'échangeur thermique.

10. Système selon l'une quelconque des revendications précédentes, dans lequel les premier (4) et second (7) étages sont combinés en une unité intégrée, l'air de suralimentation provenant du premier étage (4) passant dans le système d'écoulement d'air de suralimentation du second étage (7), les premier (4) et second (7) étages étant fusionnés sous forme de l'unité intégrée dans un processus de fusion en une seule opération.

11. Système selon la revendication 10, dans lequel les premier (4) et second (7) étages sont brasés sous forme de l'unité intégrée en une opération de brasage à une seule étape.

12. Système selon l'une quelconque des revendications 1 à 9, dans lequel les premier (4) et second (7) étages sont combinés en une unité intégrée, l'air de suralimentation provenant du premier étage (4) passant immédiatement dans le système d'écoulement d'air de suralimentation du second étage (7), les premier (4) et second (7) étages étant combinés en un ensemble en deux parties par des moyens de serrage ou autres moyens mécaniques.
